# EUROPEAN PATENT APPLICATION

(11) **EP 4 440 180 A1**
(43) Date of publication of application: **02.10.2024**
(21) Application number: 22897719.5
(22) Date of filing: 18.11.2022
(51) Int. Cl.: H04W 24/02

(54) **INFORMATION REPORTING METHOD AND APPARATUS, INFORMATION CONFIGURATION METHOD AND APPARATUS, TERMINAL AND NETWORK SIDE DEVICE**

(30) Priority: 24.11.2021 CN 202111405894
(71) Applicant: Vivo Mobile Communication Co., Ltd., Dongguan, Guangdong 523863 (CN)
(72) Inventor: LIU, Jiamin, Dongguan, Guangdong 523863 (CN); BAO, Wei, Dongguan, Guangdong 523863 (CN); YANG, Xiaodong, Dongguan, Guangdong 523863 (CN)
(74) Representative: Lavoix
(86) International application number: PCT/CN2022/132860
(87) International publication number: WO 2023/093636

(57) **Abstract**

This application discloses an information reporting method, a configuration method, apparatuses, a terminal and a network side device, belonging to the technical field of communications. The information reporting method of embodiments of this application includes: receiving, by a primary terminal, configuration information from a network side device, where the primary terminal is capable of co-transmitting data with a secondary terminal; and sending, by the primary terminal, a buffer status report (BSR) to the network side device according to the configuration information.

## Description

### CROSS-REFERENCE TO RELATED APPLICATION

This application claims priority to Chinese Patent Application No. 202111405894.9 filed on November 24, 2021, which is incorporated herein by reference in its entirety.

### TECHNICAL FIELD

This application belongs to the technical field of communications, and particularly relates to an information reporting method and apparatus, a configuration method and apparatus, a terminal and a network side device.

### BACKGROUND

All medium access control (Medium Access Control, MAC) entities, radio link control (Radio Link Control, RLC) entities and packet data convergence protocol (Packet Data Convergence Protocol, PDCP) entities involved in reporting of a buffer status report (Buffer Status Report, BSR) are located in one terminal, and the BSR is directly reported by this terminal. However, in a terminal aggregation architecture, when a plurality of terminals are connected to the same base station at the same time, it is not yet clear how to report a BSR.

### SUMMARY

Embodiments of this application provide an information reporting method and apparatus, a configuration method and apparatus, a terminal and a network side device, which can solve the problem of how to report a BSR in a terminal aggregation architecture.

A first aspect provides an information reporting method, applied to a primary terminal, including:
receiving, by the primary terminal, configuration information from a network side device, where the primary terminal is capable of co-transmitting data with a secondary terminal; and
sending, by the primary terminal, a BSR to the network side device according to the configuration information.

A second aspect provides an information reporting apparatus, applied to a secondary terminal, including:
receiving, by the secondary terminal, configuration information from a network side device, where the secondary terminal is capable of co-transmitting data with a primary terminal; and
sending, by the secondary terminal, a BSR to the network side device according to the configuration information.

A third aspect provides a configuration method, applied to a network side device, including:
sending, by the network side device, configuration information to a primary terminal and/or a secondary terminal;
where the primary terminal is capable of co-transmitting data with the secondary terminal; and the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

A fourth aspect provides an information reporting apparatus, applied to a primary terminal, including:
a first receiving module, configured to receive configuration information from a network side device, where the primary terminal is capable of co-transmitting data with a secondary terminal; and
a first sending module, configured to send a BSR to the network side device according to the configuration information.

A fifth aspect provides an information reporting apparatus, applied to a secondary terminal, including:
a second receiving module, configured to receive configuration information from a network side device, where the secondary terminal is capable of co-transmitting data with a primary terminal; and
a third sending module, configured to send a BSR to the network side device according to the configuration information.

A sixth aspect provides a configuration apparatus, applied to a network side device, including:
an eighth sending module, configured to send configuration information to a primary terminal and/or a secondary terminal;
where the primary terminal is capable of co-transmitting data with the secondary terminal; and the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

A seventh aspect provides a terminal, including a processor and a memory. The memory stores a program or instruction runnable in the processor, and the program or instruction, when executed by the processor, implements steps of the method according to the first aspect, or steps of the method according to the second aspect.

An eighth aspect provides a terminal. The terminal is a primary terminal or a secondary terminal, including a processor and a communication interface. The primary terminal is capable of co-transmitting data with the secondary terminal. The communication interface is configured to receive configuration information from a network side device, and send a BSR to the network side device according to the configuration information.

A ninth aspect provides a network side device. The network side device includes a processor and a memory. The memory stores a program or instruction runnable in the processor, and the program or instruction, when executed by the processor, implements steps of the method according to the third aspect.

A tenth aspect provides a network side device, including a processor and a communication interface. The communication interface is configured to send configuration information to a primary terminal and/or a secondary terminal. The primary terminal is capable of co-transmitting data with the secondary terminal.

An eleventh aspect provides a communication system, including: a primary terminal, a secondary terminal and a network side device. The primary terminal may be configured to execute steps of the information reporting method according to the first aspect. The secondary terminal may be configured to execute steps of the information reporting method according to the second aspect. The network side device may be configured to execute steps of the information reporting method according to the third aspect.

A twelfth aspect provides a readable storage medium, storing a program or instruction therein. The program or instruction, when executed by the processor, implements steps of the method according to the first aspect, or steps of the method according to the second aspect, or steps of the method according to the third aspect.

A thirteenth aspect provides a chip, including a processor and a communication interface. The communication interface is coupled with the processor. The processor is configured to run a program or instruction to implement steps of the method according to the first aspect, or steps of the method according to the second aspect, or steps of the method according to the third aspect.

A fourteenth aspect provides a computer program/program product. The computer program/program product is stored in a storage medium. The computer program/program product is executed by at least one processor to implement steps of the method according to the first aspect, or steps of the method according to the second aspect, or steps of the method according to the third aspect.

A fifteenth aspect provides a communication device, configured to execute steps of the method according to the first aspect, or steps of the method according to the second aspect, or steps of the method according to the third aspect.

In the embodiments of this application, the primary terminal may receive configuration information from the network side device, and send a BSR to the network side device according to the configuration information, and the primary terminal may perform data common transmission with the secondary terminal. Thereby, the BSR reporting manner in the terminal aggregation architecture can be determined, so that the network side device can better perform uplink resource scheduling and transmission of each terminal according to the buffer reporting situation.

### BRIEF DESCRIPTION OF THE DRAWINGS

FIG. 1 is a block diagram of a wireless communication system applicable to embodiments of this application;
FIG. 2A, FIG. 2B and FIG. 2C are schematic architecture diagrams of protocol stacks applicable to embodiments of this application;
FIG. 3 is a flowchart of an information reporting method according to embodiments of this application;
FIG. 4 is a flowchart of another information reporting method according to embodiments of this application;
FIG. 5 is a flowchart of a configuration method according to embodiments of this application;
FIG. 6 is a schematic structural diagram of an information reporting apparatus according to embodiments of this application;
FIG. 7 is a schematic structural diagram of another information reporting apparatus according to embodiments of this application;
FIG. 8 is a schematic structural diagram of a configuration apparatus according to embodiments of this application;
FIG. 9 is a schematic structural diagram of a communication device according to embodiments of this application;
FIG. 10 is a schematic structural diagram of a terminal according to embodiments of this application; and
FIG. 11 is a schematic structural diagram of a network side device according to embodiments of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

Terms such as "first" and "second" in the specification and claims of this application are used to distinguish similar objects, but are unnecessarily used to describe a specific sequence or order. It should be understood that the terms used in this way are exchangeable in a proper case, so that the embodiments of the present disclosure can be implemented in an order different from the order shown or described herein, and the objects distinguished by "first" and "second" are usually of the same type, and there is no limit to the number of the objects, for example, there may be one or more first objects. In addition, "and/or" used in this specification and the claims represents at least one of the connected objects. The character "/" generally indicates an "or" relationship between the objects associated before and after.

It is worth pointing out that the technologies described in this application may be applied not only to a long term evolution (Long Term Evolution, LTE)/LTE-advanced (LTE-Advanced, LTE-A) system, but also to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA) and other systems. The terms "system" and "network" in the embodiments of this application are often used interchangeably, and the technologies described may be used not only for the above-mentioned systems and radio technologies, but also for other systems and radio technologies. The following description describes a new radio (New Radio, NR) system for exemplary purposes, and NR terminology is used in most of the following descriptions, but these technologies may also be applied to applications other than NR system applications, such as 6^{th} generation (6^{th} Generation, 6G) communication systems.

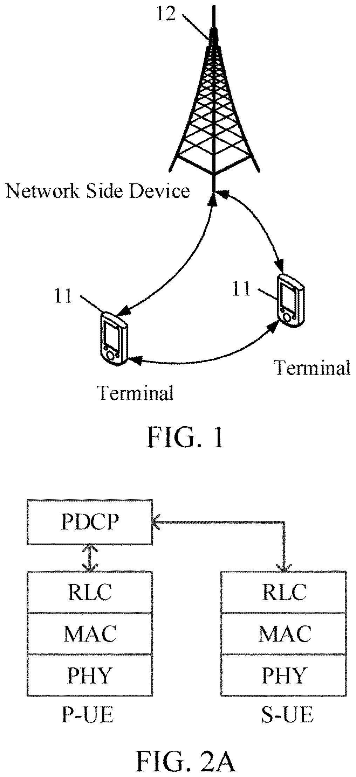

FIG. 1 shows a block diagram of a wireless communication system applicable to embodiments of this application. The wireless communication system includes terminals 11 and a network side device 12. The terminal 11 may be a mobile phone, a tablet personal computer (Tablet Personal Computer), a laptop computer (Laptop Computer) or notebook computer, a personal digital assistant (Personal Digital Assistant, PDA), a palm computer, a netbook, an ultra-mobile personal computer (UMPC), a mobile Internet device (Mobile Internet Device, MID), an augmented reality (AR)/virtual reality (VR) device, a robot, a wearable device (Wearable Device), vehicle user equipment (Vehicle User Equipment, VUE), pedestrian user equipment (Pedestrian User Equipment, PUE), a smart home (home devices with a wireless communication function, such as a refrigerator, a television, a washing machine, furniture or the like), a game machine, a personal computer (PC), a teller machine, a self-service machine and other terminal side devices. The wearable device includes a smart watch, a smart bracelet, smart headphones, smart glasses, smart jewelry (a smart bangle bracelet, a smart chain bracelet, a smart ring, a smart necklace, a smart bangle anklet, a smart chain anklet, etc.), a smart wristband, smart clothes, etc. It should be noted that the specific type of the terminal 11 is not limited in the embodiments of this application. The network side device 12 may include an access network device or a core network device. The access network device 12 may also be called a radio access network device, a radio access network (Radio Access Network, RAN), a radio access network function or a radio access network unit. The access network device 12 may include a base station, a wireless local area network (Wireless Local Area Network, WLAN) access point, a WiFi node or the like. The base station may be called a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP) or some appropriate terms in the art. The base station is not limited to a specific technical vocabulary as long as the same technical effect is achieved.

In order to facilitate the understanding of the embodiments of this application, the following contents will be explained first.

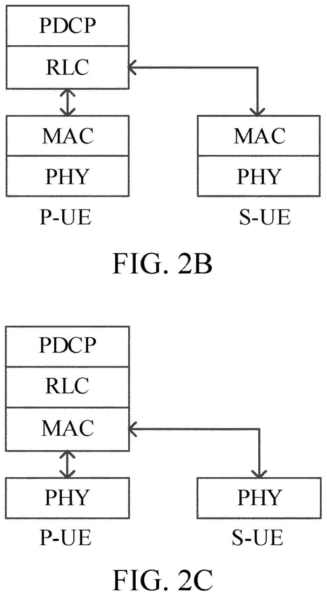

In the embodiments of this application, multi-terminal architecture/terminal aggregation architectures of aggregation/backup/switchover bearers involved mainly refers to user plane (User Plane, UP) protocol stack architectures shown in FIG. 2A to FIG. 2C. The UP protocol stack architecture shown in FIG. 2A may also be called a PDCP anchor architecture, and PDCP entities of a primary terminal (P-UE) are respectively associated with RLC entities of the P-UE and a secondary terminal (S-UE). The UP protocol stack architecture shown in FIG. 2B may also be called an RLC anchor architecture, and PDCP entities of a P-UE are respectively associated with MAC entities of the P-UE and an S-UE. The UP protocol stack architecture shown in FIG. 2C may also be called a MAC anchor architecture, and PDCP entities of a P-UE are respectively associated with physical (Physical, PHY) entities of the P-UE and an S-UE. It can be understood that in the multi-terminal architecture, there is a primary terminal which is associated with at least one secondary terminal, that is, there may be one or more secondary terminals.

In the embodiments of this application, the bearers involved mainly include the following types:
1) a bearer only at the primary terminal, i.e., a data bearer that is generated by the primary terminal and transmitted completely through the protocol stack and link of the primary terminal; this bearer may also be called a primary terminal bearer, which is an existing bearer type;
2) a split bearer whose anchor is at the primary terminal, i.e., a data bearer that is generated by the primary terminal and may be transmitted through the protocol stack and link of the primary terminal and/or the secondary terminal; this bearer may also be called an aggregation bearer, which is a new bearer type involved in this embodiment; and
3) a bearer only at the secondary terminal, i.e., a data bearer that is generated by the secondary terminal and transmitted completely through the protocol stack and link of the secondary terminal; this bearer may also be called a secondary terminal bearer, which is an existing bearer type.

It should be noted that the bearers involved in 1) and 3) may perform BSR reporting, packetization and sending according to the existing manners. This application focuses on the BSR reporting, packetization and sending process related to the new bearer type/aggregation bearer, and the following embodiments will be described in detail mainly by taking the new bearer type as an example. In a specific embodiment, the corresponding existing bearer can be superimposed on the new bearer for BSR reporting, packetization and sending according to needs and actual conditions.

Optionally, the aggregation bearer in this embodiment of this application may also be called a backup bearer, a switchover bearer, a split bearer, etc., which is not limited herein.

Since the multi-terminal bearer aggregation architecture involves in-depth cooperation between multiple terminals, the characteristics of the interfaces between the terminals have important determinants for buffer reporting and data packet organizing of multi-terminal aggregation bearers.

Optionally, in this embodiment of this application, the interfaces between the terminals may be non-ideal interfaces or ideal interfaces. The non-ideal interfaces may be applicable to scenes that do not require high interface characteristics, and may be applicable to all interface types, for example, wired interfaces/wireless interfaces, standardized interfaces/non-standardized interfaces, PC5 interfaces/bluetooth/wifi, etc. may be used between the UEs. Non-ideal interfaces have the characteristics that real-time information and data interaction between terminals cannot be achieved, and the general interaction latency is on the order of milliseconds (ms) or sub-ms, for example, 10^-2ms to tens of ms. In this case, data generated by the primary terminal needs to be sent to the secondary terminal in advance, and the secondary terminal performs BSR reporting according to the buffered data volume of the aggregation bearer, requests scheduling to the base station, and organizes the data already in its buffer to be packetized and sent according to the size of scheduling resources. Ideal interfaces have the characteristic that the transmission latency between terminals is low enough, for example, less than or much less than the order of ms, so that fast interaction of the status and data can be achieved between terminals and the transmission and scheduling efficiency is higher.

Optionally, the interfaces between the terminals are non-ideal interfaces, then the applicable architecture is the PDCP anchor architecture shown in FIG. 2A. The interfaces between the terminals are ideal interfaces, any UP protocol stack architecture in FIG. 2A to FIG. 2C may be selected.

In this embodiment of this application, for uplink data of the terminals, a size of the buffered data volume may be reported to the base station through a BSR process, and the base station performs scheduling according to the size of the buffered data volume and allocates appropriate uplink resources for uplink transmission of the terminals. Manners for triggering the BSR may include at least one of:
(1) regular event triggering: typically, when higher-priority data arrives, i.e., when data with higher priority than data in the existing buffer arrives, or when there is no uplink data to be sent in the buffer, the BSR reporting process is triggered once, which is called a regular BSR;
(2) padding (Padding) BSR triggering: when uplink resources have been allocated and the number of padding data bits is equal to or greater than the size of a BSR MAC control element (Control Element, CE) plus a header thereof, the BSR reporting process is triggered, and this BSR is called a padding BSR;
(3) periodic triggering: by means of a periodic timer, a BSR is sent to the base station each time the timer expires, and this BSR is called a periodic (Periodic) BSR; and
(4) BSR retransmission timer: when the timer expires, if there is still data to be sent in the current buffer, then the BSR is reported again, which is also called a regular BSR, where the timer is started or restarted after the BSR is sent, and the timer is restarted each time the terminal receives new data scheduling resources about the uplink.

An information reporting method and apparatus, a configuration method and apparatus, a terminal and a network side device provided by the embodiments of this application will be described in detail below in conjunction with the accompanying drawings and through some embodiments and application scenes thereof.

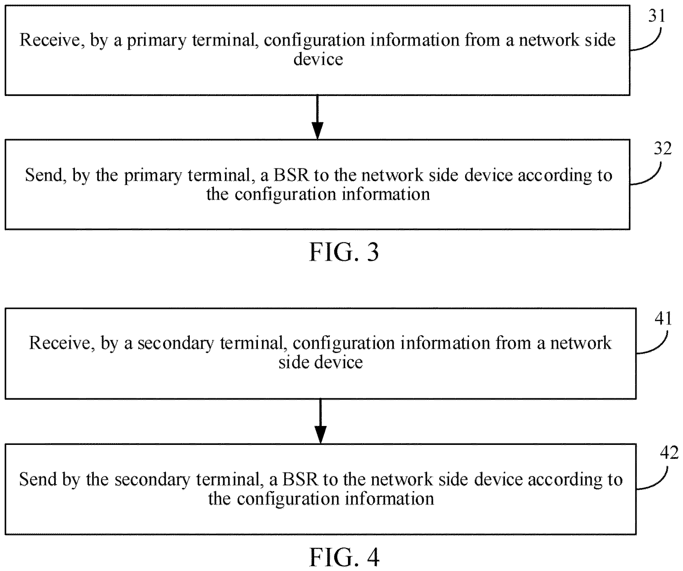

Referring to FIG. 3, FIG. 3 is a flowchart of an information reporting method according to embodiments of this application. The method is executed by a primary terminal. As shown in FIG. 3, the method includes the following steps:
Step 31: The primary terminal receives configuration information from a network side device.
Step 32: The primary terminal sends a BSR to the network side device according to the configuration information.

The primary terminal is capable of co-transmitting data with a secondary terminal. That is, the data of a certain service or the data of the primary terminal may be transmitted together by the primary terminal and the secondary terminal, that is, the data can be jointly transmitted by the primary terminal and the secondary terminal.

In some embodiments, the sending the BSR to the network side device may be referred to as: performing BSR reporting to the network side device.

In the information reporting method according to the embodiments of this application, the primary terminal may receive configuration information from the network side device, and send a BSR to the network side device according to the configuration information, and the primary terminal may perform data common transmission with the secondary terminal. Thereby, the BSR reporting manner in the terminal aggregation architecture may be determined, so that the network side device can better perform uplink resource scheduling and transmission of each terminal according to the buffer reporting situation. In this way, the data of a single user is sufficiently and efficiently transmitted by using the links of multiple terminals, so as to enhance the service experience of the user, ensure the quality of service (Quality of Service, QoS) of the service, thereby ensuring the system efficiency while improving the user experience.

In the interaction between the terminal and the network side device, the network side device is always in the position of the controller and the terminal is in the position of the controlled. Therefore, in different cases, if a unified understanding and unified behaviors between the network side device and the terminal are to be achieved, the network side device needs to send the configuration information to the terminal.

Optionally, the configuration information may be used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device, for example, the type is a PDCP anchor, an RLC anchor, a MAC anchor, or the like;
standardized interfaces being adopted between the primary terminal and the secondary terminal, for example, the interface is a PC5 interface or the like;
non-standardized interfaces being adopted between the primary terminal and the secondary terminal;
non-ideal interfaces being adopted between the primary terminal and the secondary terminal, for example, the non-ideal interfaces are wireless interfaces, interfaces with a transmission latency of greater than or equal to a certain threshold, or the like;
ideal interfaces being adopted between the primary terminal and the secondary terminal, for example, the ideal interfaces are wired interfaces, interfaces with a transmission latency of less than or equal to a certain threshold; and
a BSR reporting manner adopted by the primary terminal.

In this way, according to the above configuration information, the network side device and the primary terminal can have the same knowledge of the BSR and data processing manners, and can operate according to a unified BSR reporting manner.

In some embodiments, before the network side device, such as the base station, sends configuration information to the UE, a UE reporting process may be introduced, and the information reported is, for example, information of interfaces between UEs and/or the preferred operation and processing manner of the UE, so that the base station can decide the appropriate data processing manner. For example, the reporting may be performed only by the primary UE.

In some embodiments, the primary UE and the secondary UE may separately perform the BSR reporting process. The buffered data volume reported by the primary UE may include the sum of a data volume of a PDCP entity and an RLC entity corresponding to the bearer (the existing bearer type) only at the primary UE, plus a data volume of a PDCP entity corresponding to the split bearer (new bearer type) whose anchor is at the primary UE and a corresponding RLC entity at the primary UE. The buffered data volume reported by the secondary UE may include the sum of a data volume of a PDCP entity and an RLC entity corresponding to the bearer (the existing bearer type) only at the secondary UE, plus a data volume of a PDCP entity corresponding to the split bearer (new bearer type) whose anchor is at the primary UE and a corresponding RLC entity at the secondary UE.

In some embodiments, the primary UE reports the BSR corresponding to the split bearer whose anchor is at the primary UE, the data volume reported may include the sum of the data volume corresponding to the bearer only at the primary UE, plus the data volume of the PDCP entity corresponding to the split bearer whose anchor is at the primary UE and the corresponding RLC entity at the primary UE, and optionally, plus the data volume of the RLC entity at the secondary UE corresponding to the PDCP entity corresponding to the split bearer whose anchor is at the primary UE. The secondary UE may or may not report the BS contents corresponding to the new bearer.

In some embodiments, a supplementary BSR corresponding to the split bearer whose anchor is at the primary UE may be reported at the secondary UE, which includes only the data volume of the RLC entity at the secondary UE corresponding to the PDCP entity corresponding to the split bearer whose anchor is at the primary UE.

In some embodiments, the primary UE may organize uplink sending of the data packets of the existing bearer type and/or the new bearer type according to the received uplink grant resources allocated by the base station. The secondary UE may organize uplink sending of the data packets of the existing bearer type and/or the new bearer type according to the received uplink grant resources allocated by the base station.

In some embodiments, the secondary UE requests data of the new bearer type from the primary UE according to the received uplink grant resources allocated by the base station, and performs uplink sending according to the data sent by the primary UE.

Since the characteristics of the interfaces between the terminals have important determinants for buffer reporting and data packet organizing of multi-terminal aggregation bearers, the BSR of the primary terminal will be described below on a case-by-case basis in conjunction with the types of the interfaces between the terminals.

### Case I:

In Case I, the interfaces between the terminals are non-ideal interfaces, and the PDCP anchor architecture shown in FIG. 2A is adopted. The primary terminal may report the BSR using the existing BSR triggering manner, for example, regular event triggering, Padding BSR triggering and/or periodic triggering, according to the configuration of the network side device.

Optionally, the buffered data volume in the BSR of the primary terminal may include at least one of:
- a data volume of a PDCP entity of an aggregation bearer, for example, data corresponding to this data volume may include at least one of: a PDCP service data unit (Service Data Unit, SDU) to be initially transmitted, a PDCP protocol data unit (Protocol Data Unit, PDU) to be initially transmitted, a PDCP control PDU to be transmitted, a PDCP SDU/PDU to be retransmitted, etc.; and
- a data volume of an RLC entity at the primary terminal corresponding to the PDCP entity of the aggregation bearer, for example, data corresponding to this data volume may include at least one of: an RLC SDU/ SDU segment/PDU to be initially transmitted, an RLC status PDU to be transmitted, an RLC PDU to be retransmitted, etc.

The aggregation bearer is a split bearer whose PDCP anchor is at the primary terminal.

In some embodiments, the primary terminal, when receiving an uplink resource scheduling grant of the network side device, may packetize the data buffered therein according to the existing logical channel priority rules, and send the data packet obtained by the packetization.

In some embodiments, the primary terminal may send data of the PDCP entity of the aggregation bearer to the secondary terminal to be buffered through the interfaces between the primary and secondary terminals by way of distribution or replication according to a certain strategy or a status feedback or request from the secondary UE.

### Case II:

In Case II, the interfaces between the terminals are ideal interfaces, and the PDCP anchor architecture shown in FIG. 2A is adopted. Since the interfaces between the terminals are ideal interfaces, that is, the interaction of information and data between the terminals is fast enough, primary data corresponding to the aggregation bearer may be stored in the primary terminal, and the primary terminal is responsible for primary BSR reporting, that is, the secondary terminal does not need to buffer any RLC SDU/ PDU data to be initially transmitted.

Optionally, the primary terminal may report the BSR using the existing BSR triggering manner, for example, regular event triggering, Padding BSR triggering and/or periodic triggering, according to the configuration of the network side device or upon receiving the BSR request of the secondary terminal.

Optionally, the buffered data volume in the BSR of the primary terminal may include at least one of:
- a data volume of a PDCP entity of an aggregation bearer, for example, data corresponding to this data volume may include at least one of: a PDCP SDU/PDU to be initially transmitted, a PDCP control PDU to be transmitted, a PDCP SDU/ PDU to be retransmitted, etc.; and
- a data volume of an RLC entity at the primary terminal corresponding to the PDCP entity of the aggregation bearer, for example, data corresponding to this data volume may include at least one of: an RLC SDU/ SDU segment/PDU to be initially transmitted, an RLC status PDU to be transmitted, an RLC PDU to be retransmitted, etc.; optionally, the data corresponding to this data volume may not include the RLC SDU/PDU to be initially transmitted, which is stored centrally in the PDCP entity of the primary terminal; and
- a first data volume. The first data volume is a data volume of an RLC entity located at the secondary terminal corresponding to the PDCP entity of the aggregation bearer. For example, data corresponding to the first data volume may include at least one of: an RLC SDU/ SDU segment/PDU to be initially transmitted, an RLC status PDU to be transmitted, an RLC PDU to be retransmitted, etc. Optionally, the data corresponding to this data volume may not include the RLC SDU/PDU to be initially transmitted, which is stored centrally in the PDCP entity of the primary terminal.

The aggregation bearer is a split bearer whose PDCP anchor is at the primary terminal.

It should be noted that the first data volume needs to be distinguished from the previous two items, and the base station needs to explicitly obtain the size of the first data volume. This is because the data corresponding to the first data volume can be transmitted and sent only through the uplink resources allocated to the secondary terminal. The distinguishing method may include: the primary terminal sends the first data volume using a target logical channel group (Logical Channel Group, LCG)/specific LCG, or the primary terminal sends the first data volume using a target MAC CE/specific MAC CE. The target LCG/specific LCG may be predefined or configured in the network, and is not used for transmitting the buffered data volumes of the previous two items. The target MAC CE/specific MAC CE may be predefined or configured in the network, and is not used for transmitting the buffered data volumes of the previous two items.

It should be noted that in Case II, that is, in a case that ideal interfaces and the PDCP anchor architecture are adopted, the BSR form in Case I may be used, but on this basis, the data volume corresponding to the secondary terminal, for example, the first data volume, may also be reported.

Optionally, the BSR of the primary terminal may be sent in a case that a BSR request of the secondary terminal is received. The BSR request includes the first data volume, and the first data volume is reported by the primary terminal.

Optionally, the primary terminal, when receiving an uplink resource scheduling grant of the network side device, may packetize the data buffered therein according to the existing logical channel priority rules, and send the data packet obtained by the packetization.

Optionally, the primary terminal may acquire a size of uplink grant resources allocated by the network side device for the secondary terminal, and send first data buffered and conforming to the size of the uplink grant resources to the secondary terminal, and the secondary terminal may packetize the first data and send the data packet obtained by the packetization.

Optionally, in terms of acquiring the size of the uplink grant resources allocated by the network side device for the secondary terminal, the primary terminal may monitor a physical downlink control channel (Physical Downlink Control Channel, PDCCH) of the secondary terminal to acquire the size of the uplink grant resources, or the primary terminal may receive a first request from the secondary terminal. The first request includes the size of the uplink grant resources.

In some embodiments, the secondary terminal, before requesting data from the primary terminal, may subtract the size of resources occupied by the data buffered in the secondary terminal to be transmitted from the size of the total grant resources, or subtract the size of resources of the data buffered in the secondary terminal to be transmitted with higher priority from the total grant resources, and then request the data from the primary terminal according to the size of the remaining resources.

In some embodiments, the secondary terminal, before requesting data from the primary terminal, may include complete information (for example, the size of the total grant resources, the data volume buffered in the secondary terminal and the corresponding logical channel/logical channel group/priority information) in the corresponding request and then request the data from the primary terminal, and the primary terminal determines the data volume to be sent to the secondary terminal after a comprehensive consideration, and sends new data to the secondary terminal according to this data volume.

It should be noted that in the PDCP anchor architecture, in order to ensure complete transmission of data, the new data sent by the primary terminal to the secondary terminal can only be in the form of a PDCP PDU or complete RLC SDU.

### Case III:

In Case III, the interfaces between the terminals are ideal interfaces, and the RLC entity or layers below adopt the anchor architecture, for example, the anchor architecture shown in FIG. 2B or FIG. 2C. For example, if the aggregation bearer has a common RLC entity, RLC entity, an anchor RLC entity, the RLC entity must be located at the primary terminal. Then, all types of data that need to be transmitted by the secondary terminal in Case II, for example, the RLC SDU segment, the RLC retransmitted PDU and the RLC status PDU, may be buffered in the anchor RLC entity of the primary terminal, so the secondary terminal may have no buffered data to be sent.

Optionally, the primary terminal may report the BSR using the existing BSR triggering manner, for example, regular event triggering, Padding BSR triggering and/or periodic triggering, according to the configuration of the network side device.

Optionally, the buffered data volume in the BSR of the primary terminal may include at least one of:
- a data volume of a PDCP entity of an aggregation bearer, for example, data corresponding to this data volume may include at least one of: a PDCP SDU/PDU to be initially transmitted, a PDCP control PDU to be transmitted, a PDCP SDU/ PDU to be retransmitted, etc.; and
- a data volume of an anchor RLC entity corresponding to the PDCP entity of the aggregation bearer. There is only one anchor RLC entity that is generally located at the primary terminal. For example, data corresponding to this data volume may include at least one of: an RLC SDU/ SDU segment/PDU to be initially transmitted, an RLC status PDU to be transmitted, an RLC PDU to be retransmitted, etc.

The aggregation bearer is a split bearer whose RLC anchor is at the primary terminal. The secondary terminal does not have the RLC layer and layers above, and thus, have no demands for BSR reporting.

Optionally, the primary terminal, when receiving an uplink resource scheduling grant of the network side device, may packetize the data buffered therein according to the existing logical channel priority rules, and send the data packet obtained by the packetization.

Optionally, the primary terminal may acquire a size of uplink grant resources allocated by the network side device for the secondary terminal, and send first data buffered and conforming to the size of the uplink grant resources to the secondary terminal, and the secondary terminal may packetize the first data and send the data packet obtained by the packetization.

Optionally, in terms of acquiring the size of the uplink grant resources allocated by the network side device for the secondary terminal, the primary terminal may monitor a PDCCH of the secondary terminal to acquire the size of the uplink grant resources, or the primary terminal may receive a first request from the secondary terminal. The first request includes the size of the uplink grant resources.

Optionally, in Case III, the first data may include at least one of:
a PDCP PDU;
at least one of an initially transmitted RLC PDU, a retransmitted RLC PDU and an RLC status PDU;
at least one of a MAC PDU, a MAC sub PDU and a MAC CE; and
a MAC transport block (Transport Block, TB).

The above embodiments have described the BSR reporting and data transmission process related to the primary terminal, and the BSR reporting and data transmission process related to the secondary terminal will be described below.

Referring to FIG. 4, FIG. 4 is a flowchart of an information reporting method according to embodiments of this application. The method is executed by a secondary terminal. As shown in FIG. 4, the method includes the following steps:
Step 41: The secondary terminal receives configuration information from a network side device.
Step 42: The secondary terminal sends a BSR to the network side device according to the configuration information.

The secondary terminal is capable of co-transmitting data with a primary terminal. That is, the data of a certain service or the data of the primary terminal may be transmitted together by the primary terminal and the secondary terminal, that is, the data can be jointly transmitted by the primary terminal and the secondary terminal.

In some embodiments, the sending the BSR to the network side device may be referred to as: performing BSR reporting to the network side device.

In the information reporting method according to the embodiments of this application, the secondary terminal may receive configuration information from the network side device, and send a BSR to the network side device according to the configuration information, and the secondary terminal may perform data common transmission with the primary terminal. Thereby, the BSR reporting manner in the terminal aggregation architecture can be determined, so that the network side device can better perform uplink resource scheduling and transmission of each terminal according to the buffer reporting situation, thereby ensuring the system efficiency while improving the user experience.

Optionally, the configuration information may be used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device, for example, the type is a PDCP anchor, an RLC anchor, a MAC anchor, or the like;
standardized interfaces being adopted between the primary terminal and the secondary terminal, for example, the interface is a PC5 interface or the like;
non-standardized interfaces being adopted between the primary terminal and the secondary terminal;
non-ideal interfaces being adopted between the primary terminal and the secondary terminal, for example, the non-ideal interfaces are wireless interfaces, interfaces with a transmission latency of greater than or equal to a certain threshold, or the like;
ideal interfaces being adopted between the primary terminal and the secondary terminal, for example, the ideal interfaces are wired interfaces, interfaces with a transmission latency of less than or equal to a certain threshold; and
a BSR reporting manner adopted by the primary terminal.

In this way, according to the above configuration information, the network side device and the secondary terminal can have the same knowledge of the BSR and data processing manners, and can operate according to a unified BSR reporting manner.

Since the characteristics of the interfaces between the terminals have important determinants for buffer reporting and data packet organizing of multi-terminal aggregation bearers, the BSR of the secondary terminal will be described below on a case-by-case basis in conjunction with the types of the interfaces between the terminals.

### Case I:

In Case I, the interfaces between the terminals are non-ideal interfaces, and the PDCP anchor architecture shown in FIG. 2A is adopted. The secondary terminal may report the BSR using the existing BSR triggering manner, for example, regular event triggering, Padding BSR triggering and/or periodic triggering, according to the configuration of the network side device.

Optionally, the buffered data volume in the BSR of the secondary terminal may include at least one of:
- a first data volume. The first data volume is a data volume of an RLC entity located at the secondary terminal corresponding to the PDCP entity of the aggregation bearer. For example, data corresponding to the first data volume may include at least one of: an RLC SDU/ SDU segment/PDU to be initially transmitted, an RLC status PDU to be transmitted, an RLC PDU to be retransmitted, etc.

The aggregation bearer is a split bearer whose PDCP anchor is at the primary terminal.

Optionally, the secondary terminal may acquire uplink grant resources allocated by the network side device for the secondary terminal, packetize buffered data of the secondary terminal according to the size of the uplink grant resources, and send the data packet obtained by the packetization.

In some embodiments, the secondary terminal, when receiving an uplink resource scheduling grant of the network side device, may packetize the data buffered therein according to the existing logical channel priority rules, and send the data packet obtained by the packetization.

In some embodiments, the primary terminal may send data of the PDCP entity of the aggregation bearer to the secondary terminal to be buffered through the interfaces between the primary and secondary terminals by way of distribution or replication according to a certain strategy or a status feedback or request from the secondary UE.

### Case II:

In Case II, the interfaces between the terminals are ideal interfaces, and the PDCP anchor architecture shown in FIG. 2A is adopted. Since the interfaces between the terminals are ideal interfaces, that is, the interaction of information and data between the terminals is fast enough, primary data corresponding to the aggregation bearer may be stored in the primary terminal, and the primary terminal is responsible for primary BSR reporting, that is, the secondary terminal does not need to buffer any RLC SDU/ PDU data to be initially transmitted.

Optionally, the buffered data volume of the secondary terminal may include at least one of:
- a first data volume. The first data volume is a data volume of an RLC entity located at the secondary terminal corresponding to the PDCP entity of the aggregation bearer. For example, data corresponding to the first data volume may include at least one of: an RLC SDU/ SDU segment/PDU to be initially transmitted, an RLC status PDU to be transmitted, an RLC PDU to be retransmitted, etc. Optionally, the data corresponding to this data volume may not include the RLC SDU/PDU to be initially transmitted, which is stored centrally in the PDCP entity of the primary terminal.

The aggregation bearer is a split bearer whose PDCP anchor is at the primary terminal.

Optionally, the secondary terminal may use the existing BSR triggering manner or the new BSR triggering manner according to the configuration. For example, once the buffered data volume of the RLC entity of the secondary terminal corresponding to the PDCP entity of the aggregation bearer is not 0, regular BSR or padding BSR may be triggered, or this data volume may be notified to the primary terminal through a request, and the reporting may be performed by the primary terminal.

Optionally, the secondary terminal may send a BSR request to the primary terminal. The BSR request includes a first data volume and is used for reporting the first data volume by the primary terminal.

In Case II, since the interfaces between the terminals are ideal interfaces, the latency of interaction between the primary and secondary terminals is very short, so that a large amount of data to be transmitted may be stored in the primary terminal. Therefore, the secondary terminal may not buffer the RLC SDU/PDU to be initially transmitted. However, some data must be located in the to-be-transmitted buffer of the secondary terminal and transmitted through the RLC entity of the secondary terminal. Optionally, the secondary terminal may send second data through an RLC entity thereof. The second data includes at least one of:
- an RLC SDU segment incapable of being completely accommodated during one sending process of the RLC entity. For example, in a case that the size of transmitted resources allocated by the network side device is 100 bytes and the size of one RLC SDU sent by the primary UE to the secondary UE is 400 bytes, then it is apparent that this RLC SDU cannot be sent out at one time, and there will be an RLC SDU segment with about 300 bytes left that needs to be buffered in the secondary UE and to be sent next time. The reason why this segment can only be transmitted through the secondary UE is that the primary UE and the secondary UE are independent RLC entities, and in the case that an RLC segment has been transmitted through the secondary UE, other segments also must be processed and transmitted in the same RLC entity so that these RLC segments be recombined into a complete RLC SDU at the peer RLC entity of the receiving side.
- an RLC status PDU triggered according to an RLC AM protocol in a case that the RLC entity of the secondary terminal is in an acknowledged mode (Acknowledged Mode, AM). That is, if the RLC entity of the secondary UE is in the AM, then the RLC status PDU triggered according to the RLC AM protocol must be transmitted through the RLC entity of the secondary UE.
- an RLC retransmitted PDU triggered according to the RLC AM protocol in a case that the RLC entity of the secondary terminal is in the AM. That is, if the RLC entity of the secondary UE is in the AM, then the RLC retransmitted PDU triggered according to the RLC AM protocol also must be transmitted through the RLC entity of the secondary UE.

Optionally, the secondary terminal may send a first request to the primary terminal, the first request including a size of the uplink grant resources allocated by the network side device for the secondary terminal; and then receive first data from the primary terminal, packetize the first data, and send the data packet obtained by the packetization. The first data is data buffered by the primary terminal and conforming to the size of the uplink grant resources.

In some embodiments, the secondary terminal, when receiving an uplink resource scheduling grant of the network side, may request data from the primary terminal according to the existing logical channel priority rules and the size of the grant resources. After receiving new data of the primary terminal, the secondary terminal may packetize the new data sent by the primary terminal and send the data packet. In this PDCP anchor architecture, the new data sent by the primary terminal to the secondary terminal can only be in the form of a PDCP PDU or a complete RLC SDU.

In some embodiments, the secondary terminal, before requesting data from the primary terminal, may subtract the size of resources occupied by the data buffered in the secondary terminal to be transmitted from the size of the total grant resources, or subtract the size of resources of the data buffered in the secondary terminal to be transmitted with higher priority from the total grant resources, and then request the data from the primary terminal according to the size of the remaining resources.

In some embodiments, the secondary terminal, before requesting data from the primary terminal, may include complete information (for example, the size of the total grant resources, the data volume buffered in the secondary terminal and the corresponding logical channel/logical channel group/priority information) in the corresponding request and then request the data from the primary terminal, and the primary terminal determines the data volume to be sent to the secondary terminal after a comprehensive consideration, and sends new data to the secondary terminal according to this data volume.

It should be noted that if the secondary terminal has buffered the data volume that can be transmitted only by the secondary terminal before or during packetization and that cannot be carried by the current resources at one time, for example, the remaining RLC SDU segment, the retransmitted PDU in the RLC entity with lower priority or the RLC status PDU, any one of the following items may be executed:
- the secondary terminal triggers BSR reporting itself, and reports the buffered data to the base station until the base station reschedules the secondary terminal;
- the secondary terminal sends notification information containing the buffered data to the primary terminal, and the primary terminal reports data carrying the buffered data specific to the secondary terminal to the base station until the base station reschedules the secondary terminal; and
- the terminal side does not perform new reporting for the buffered data specific to the secondary terminal, and the base station realizes and ensures transmission. For example, only when the buffered data volume reported by the primary terminal is 0, can the scheduling of the primary and secondary terminals be stopped, and the base station may infer from the previous segment of the RLC of the secondary terminal that there will be subsequent segments later, or determine, according to the RLC status of the base station side, whether there is an RLC retransmitted PDU or status PDU at the secondary terminal that needs to be sent.

### Case III:

In Case III, the interfaces between the terminals are ideal interfaces, and the RLC entity or layers below adopt the anchor architecture, for example, the anchor architecture shown in FIG. 2B or FIG. 2C. The secondary terminal does not have the RLC layer and layers above, and thus, have no demands for BSR reporting.

Optionally, the secondary terminal may send a first request to the primary terminal, the first request including a size of the uplink grant resources allocated by the network side device for the secondary terminal; and then receive first data from the primary terminal, packetize the first data, and send the data packet obtained by the packetization. The first data is data buffered by the primary terminal and conforming to the size of the uplink grant resources.

In some embodiments, the secondary terminal, when receiving an uplink resource scheduling grant of the network side, may request data from the primary terminal according to the existing logical channel priority rules and the size of the grant resources. After receiving new data of the primary terminal, the secondary terminal may packetize the new data sent by the primary terminal and send the data packet. In this PDCP anchor architecture, the new data sent by the primary terminal to the secondary terminal can only be in the form of a PDCP PDU or a complete RLC SDU.

Optionally, in Case III, the first data may include at least one of:
a PDCP PDU;
at least one of an initially transmitted RLC PDU, a retransmitted RLC PDU and an RLC status PDU;
at least one of a MAC PDU, a MAC sub PDU and a MAC CE; and
a MAC TB.

The above embodiments have described the BSR reporting and data transmission processes related to the primary terminal and the secondary terminal, and the configuration process related to the network side device will be described below.

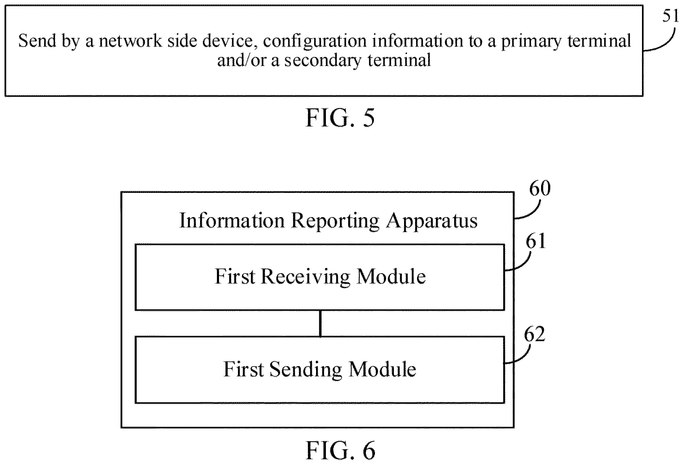

Referring to FIG. 5, FIG. 5 is a flowchart of a configuration method according to embodiments of this application. The method is executed by a network side device. As shown in FIG. 5, the method includes the following steps:
Step 51: The network side device sends configuration information to a primary terminal and/or a secondary terminal.

Optionally, the configuration information may be used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device, for example, the type is a PDCP anchor, an RLC anchor, a MAC anchor, or the like;
standardized interfaces being adopted between the primary terminal and the secondary terminal, for example, the interface is a PC5 interface or the like;
non-standardized interfaces being adopted between the primary terminal and the secondary terminal;
non-ideal interfaces being adopted between the primary terminal and the secondary terminal, for example, the non-ideal interfaces are wireless interfaces, interfaces with a transmission latency of greater than or equal to a certain threshold, or the like;
ideal interfaces being adopted between the primary terminal and the secondary terminal, for example, the ideal interfaces are wired interfaces, interfaces with a transmission latency of less than or equal to a certain threshold; and
a BSR reporting manner adopted by the primary terminal.

In this way, according to the above configuration information, the network side device and the secondary terminal can have the same knowledge of the BSR and data processing manners, and can operate according to a unified BSR reporting manner.

Optionally, the network side device may allocate uplink grant resources for the primary terminal and the secondary terminal according to a BSR of the primary terminal.

Optionally, the network side device may allocate the uplink grant resources for the primary terminal according to the BSR of the primary terminal, and allocate the uplink grant resources for the secondary terminal according to a BSR of the secondary terminal.

An execution subject of the information reporting method provided by the embodiments of this application may be an information reporting apparatus. In the embodiments of this application, the information reporting apparatus provided by the embodiments of this application will be described in an example that the information report apparatus executes the information reporting method.

Referring to FIG. 6, FIG. 6 is a schematic structural diagram of an information reporting apparatus according to embodiments of this application. The apparatus is applied to a primary terminal. As shown in FIG. 6, the information reporting apparatus 60 includes:
a first receiving module 61, configured to receive configuration information from a network side device, where the primary terminal is capable of co-transmitting data with a secondary terminal; and
a first sending module 62, configured to send a BSR to the network side device according to the configuration information.

Optionally, a buffered data volume in the BSR includes at least one of:
a data volume of a PDCP entity of an aggregation bearer; and
a data volume of an RLC entity located at the primary terminal corresponding to the PDCP entity of the aggregation bearer.

The aggregation bearer is a split bearer whose PDCP anchor is at the primary terminal.

Optionally, the buffered data volume in the BSR includes:
a first data volume. The first data volume is a data volume of an RLC entity located at the secondary terminal corresponding to the PDCP entity of the aggregation bearer.

Optionally, the BSR is sent in a case that the primary terminal receives a BSR request of the secondary terminal. The BSR request includes the first data volume.

Optionally, the first sending module 61 is specifically configured to:
send the first data volume using a target LCG, or send the first data volume through a target MAC CE.

Optionally, the buffered data volume in the BSR includes at least one of:
a data volume of a PDCP entity of an aggregation bearer; and
a data volume of an anchor RLC entity corresponding to the PDCP entity of the aggregation bearer.

The aggregation bearer is a split bearer whose RLC anchor is at the primary terminal.

Optionally, the information reporting apparatus 60 further includes:
a first acquisition module, configured to acquire a size of uplink grant resources allocated by the network side device for the secondary terminal; and
a second sending module, configured to send first data buffered and conforming to the size of the uplink grant resources to the secondary terminal.

Optionally, the first acquisition module is specifically configured to:
monitor a PDCCH of the secondary terminal to acquire the size of the uplink grant resources; or
receive a first request from the secondary terminal, the first request including the size of the uplink grant resources.

Optionally, the first data includes at least one of:
a PDCP PDU;
at least one of an initially transmitted RLC PDU, a retransmitted RLC PDU and an RLC status PDU;
at least one of a MAC PDU, a MAC sub PDU and a MAC CE; and
a MAC transport block (TB).

Optionally, the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

The information reporting apparatus 60 in this embodiment of this application may be an electronic device, for example, an electronic device with an operating system, or a component in an electronic device, for example, an integrated circuit or a chip. The electronic device may be a terminal or other devices other than the terminal. Exemplarily, the terminal may include, but not limited to, the types of the terminal 11 listed above, and the other devices may be servers, network attached storages (Network Attached Storages, NASs), etc., which is not specifically limited in this embodiment of this application.

The information reporting apparatus 60 provided by this embodiment of this application can implement processes implemented by the method embodiment of FIG. 3 and achieve the same technical effects. In order to avoid repetition, details will not be described here.

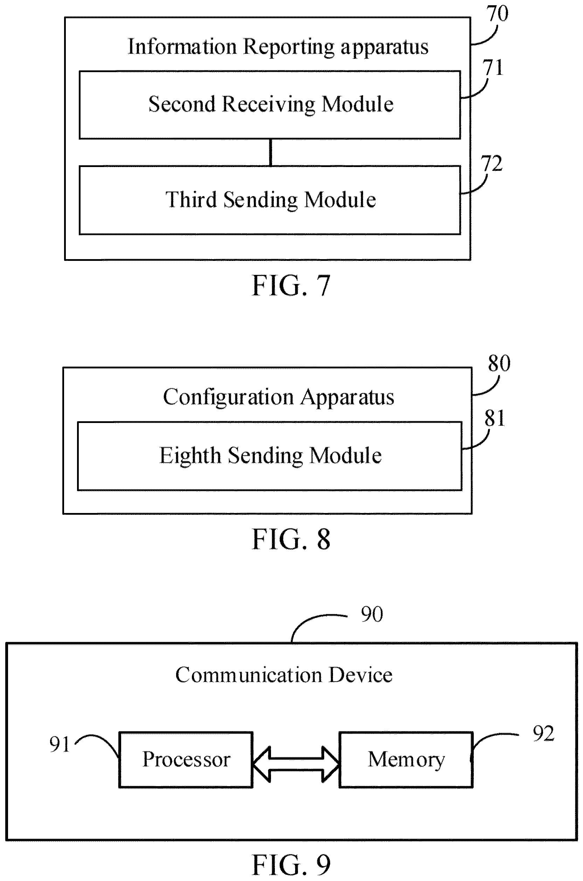

Referring to FIG. 7, FIG. 7 is a schematic structural diagram of an information reporting apparatus according to embodiments of this application. The apparatus is applied to a secondary terminal. As shown in FIG. 7, the information reporting apparatus 70 includes:
a second receiving module 71, configured to receive configuration information from a network side device, where the secondary terminal is capable of co-transmitting data with a primary terminal; and
a third sending module 72, configured to send a BSR to the network side device according to the configuration information.

Optionally, the BSR includes: a first data volume.

The first data volume is a data volume of an RLC entity located at the secondary terminal corresponding to a PDCP entity of an aggregation bearer. The aggregation bearer is a split bearer whose PDCP anchor is at the primary terminal.

Optionally, the information reporting apparatus 70 further includes:
a second acquisition module, configured to acquire uplink grant resources allocated by the network side device therefor; and
a fourth sending module, configured to packetize buffered data of the secondary terminal according to a size of the uplink grant resources, and send the data packet obtained by the packetization.

Optionally, the information reporting apparatus 70 further includes:
a fifth sending module, configured to send a BSR request to the primary terminal, the BSR request including a first data volume and being used for reporting the first data volume by the primary terminal.

The first data volume is a data volume of an RLC entity located at the secondary terminal corresponding to a PDCP entity of an aggregation bearer. The aggregation bearer is a split bearer whose PDCP anchor is at the primary terminal.

Optionally, the information reporting apparatus 70 further includes:
a sixth sending module, configured to send second data through an RLC entity of the secondary terminal.

The second data includes at least one of:
an RLC SDU segment incapable of being completely accommodated during one sending process of the RLC entity;
an RLC status PDU triggered according to an RLC AM protocol in a case that the RLC entity of the secondary terminal is in an AM; and
an RLC retransmitted PDU triggered according to the RLC AM protocol in a case that the RLC entity of the secondary terminal is in the AM.

Optionally, the information reporting apparatus 70 further includes:
a seventh sending module, configured to send a first request to the primary terminal, the first request including a size of the uplink grant resources allocated by the network side device for the secondary terminal; and
a third receiving module, configured to receive configuration information from the primary terminal.

The seventh sending module is further configured to: packetize the first data, and send the data packet obtained by the packetization, the first data being data buffered by the primary terminal and conforming to the size of the uplink grant resources.

Optionally, the first data includes at least one of:
a PDCP PDU;
at least one of an initially transmitted RLC PDU, a retransmitted RLC PDU and an RLC status PDU;
at least one of a MAC PDU, a MAC sub PDU and a MAC CE; and
a MAC TB.

Optionally, the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

The information reporting apparatus 70 in this embodiment of this application may be an electronic device, for example, an electronic device with an operating system, or a component in an electronic device, for example, an integrated circuit or a chip. The electronic device may be a terminal or other devices other than the terminal. Exemplarily, the terminal may include, but not limited to, the types of the terminal 11 listed above, and the other devices may be servers, network attached storages (Network Attached Storages, NASs), etc., which is not specifically limited in this embodiment of this application.

The information reporting apparatus 70 provided by this embodiment of this application can implement processes implemented by the method embodiment of FIG. 4 and achieve the same technical effects. In order to avoid repetition, details will not be described here.

An execution subject of the configuration method provided by the embodiments of this application may be a configuration apparatus. In the embodiments of this application, the configuration apparatus provided by the embodiments of this application will be described in an example that the configuration apparatus executes the configuration method.

Referring to FIG. 8, FIG. 8 is a schematic structural diagram of a configuration apparatus according to embodiments of this application. The apparatus is applied to a network side device. As shown in FIG. 8, the configuration apparatus 80 includes:

an eighth sending module 81, configured to send configuration information to a primary terminal and/or a secondary terminal.

The primary terminal is capable of co-transmitting data with the secondary terminal; and the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

Optionally, the configuration apparatus 80 further includes:
an allocation module, configured to allocate uplink grant resources for the primary terminal and the secondary terminal according to a BSR of the primary terminal; or allocate the uplink grant resources for the primary terminal according to the BSR of the primary terminal, and allocate the uplink grant resources for the secondary terminal according to a BSR of the secondary terminal.

The configuration apparatus 80 provided by this embodiment of this application can implement processes implemented by the method embodiment of FIG. 5 and achieve the same technical effects. In order to avoid repetition, details will not be described here.

Optionally, as shown in FIG. 9, an embodiment of this application further provides a communication device 90, including a processor 91 and a memory 92. The memory 92 stores a program or instruction runnable in the processor 91. For example, in a case that the communication device 90 is a primary terminal or a secondary terminal, the program or instruction, when executed by the processor 91, implements steps of the above information reporting method embodiment and can achieve the same technical effects. In a case that the communication device 90 is a network side device, the program or instruction, when executed by the processor 91, implements steps of the above configuration method embodiment and can achieve the same technical effects. In order to avoid repetition, details will not be described here.

An embodiment of this application further provides a terminal, including a processor and a communication interface. The communication interface is configured to receive configuration information from a network side device, and send a BSR to the network side device according to the configuration information. For example, in a case that the terminal is a primary terminal, the terminal embodiment corresponds to the above method embodiment of the primary terminal side, and all implementation processes and implementations of the above method embodiment are applicable to the terminal embodiment and can achieve the same technical effects. Alternatively, in a case that the terminal is a secondary terminal, the terminal embodiment corresponds to the above method embodiment of the secondary terminal side, and all implementation processes and implementations of the above method embodiment are applicable to the terminal embodiment and can achieve the same technical effects. In order to avoid repetition, details will not be described here.

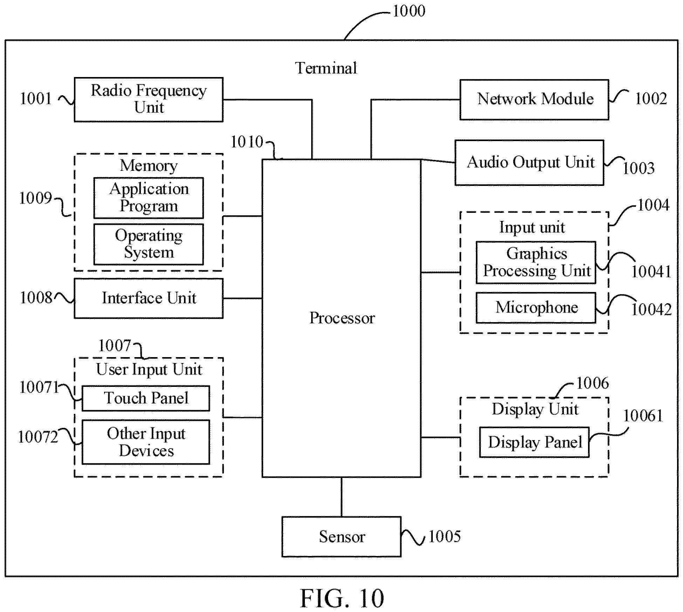

Specifically, FIG. 10 is a schematic diagram of a hardware structure of a terminal according to an embodiment of this application.

The terminal 1000 includes, but not limited to, at least part of a radio frequency unit 1001, a network module 1002, an audio output unit 1003, an input unit 1004, a sensor 1005, a display unit 1006, a user input unit 1007, an interface unit 1008, a memory 1009 and a processor 1010.

It can be understood by those skilled in the art that the terminal 1000 may further include a power supply (such as a battery) for supplying power to the components. Preferably, the power supply may be logically connected to the processor 1010 through a power management system, thereby implementing functions such as charging, discharging, and power consumption management by using the power management system. The terminal structure shown in FIG. 10 does not constitute a limitation to the terminal, and the terminal may include more or fewer components than shown, or combine some components, or have different component arrangements, which will not be described in detail.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image acquisition apparatus (such as a camera) in a video acquisition mode or an image acquisition mode. The display unit 1006 may include a display panel 10061. The display panel 10061 may be configured in the form of a liquid crystal display (LCD), an organic light-emitting diode, or the like. The user input unit 1007 includes a touch panel 10071 and at least one of other input devices 10072. The touch panel 10071 is also called a touch screen. The touch panel 10071 may include two parts: a touch detection apparatus and a touch controller. The other input devices 10072 may include, but not limited to, a physical keyboard, a functional key (such as a volume control key or a switch key), a track ball, a mouse and a joystick, which will not described herein in detail.

In this embodiment of this application, the radio frequency unit 1001, after receiving downlink data from the network side device, may transmit the downlink data to the processor 1010 for processing. In addition, the radio frequency unit 1001 may send uplink data to the network side device. Generally, the radio frequency unit 1001 includes, but is not limited to, an antenna, an amplifier, a transceiver, a coupler, a low noise amplifier, a duplexer, and the like.

The memory 1009 is configured to store a software program or instruction and various data. The memory 1009 may mainly include a first storage area for storing the program or instruction and a second storage area for storing data. The first storage area may store an operating system, an application program or instruction required by at least one function (for example, a sound playback function and an image display function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM) and a direct rambus RAM (Direct Rambus RAM, DRRAM). The memory 1009 in this embodiment of this application includes, but not limited to, these memories and any other suitable types.

The processor 1010 may include one or more processing units. Optionally, the processor 1010 integrates an application processor and a modem processor. The application processor mainly processes operations related to the operating system, the user interface and application programs, and the modem processor, such as a baseband processor, mainly processes wireless communication signals. It can be understood that the foregoing modem processor may not be integrated into the processor 1010.

Optionally, the terminal 1000 may be a primary terminal or a secondary terminal, and the radio frequency unit 1001 is configured to receive configuration information from a network side device and send a BSR to the network side device according to the configuration information.

It can be understood that in a case that the terminal 1000 is a primary terminal, the terminal embodiment corresponds to the above method embodiment of the primary terminal side, and all implementation processes and implementations of the above method embodiment are applicable to the terminal embodiment and can achieve the same technical effects. Alternatively, in a case that the terminal 1000 is a secondary terminal, the terminal embodiment corresponds to the above method embodiment of the secondary terminal side, and all implementation processes and implementations of the above method embodiment are applicable to the terminal embodiment and can achieve the same technical effects. In order to avoid repetition, details will not be described here.

An embodiment of this application further provides a network side device, including a processor and a communication interface. The communication interface is configured to send configuration information to a primary terminal and/or a secondary terminal. The network side device embodiment corresponds to the above method embodiment of the network side device, and all implementation processes and implementations of the above method embodiment are applicable to the network side device embodiment and can achieve the same technical effects.

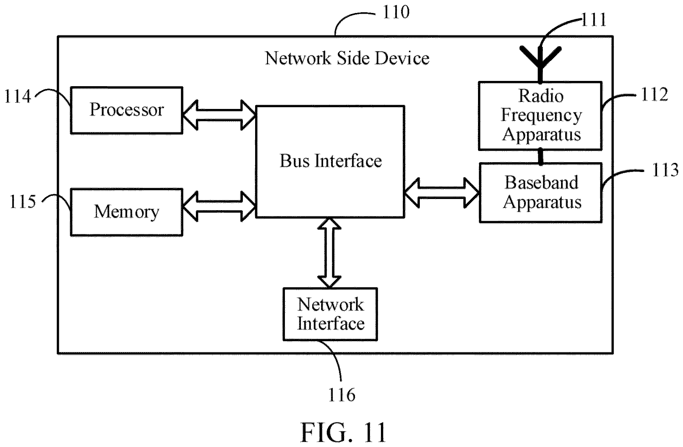

Specifically, an embodiment of this application further provides a network side device. As shown in FIG. 11, the network side device 110 includes: an antenna 111, a radio frequency apparatus 112, a baseband apparatus 113, a processor 114 and a memory 115. The antenna 111 is connected with the radio frequency apparatus 112. In an uplink direction, the radio frequency apparatus 112 receives information through the antenna 111, and sends the received information to the baseband apparatus 113 for processing. In a downlink direction, the baseband apparatus 113 processes information to be sent, and sends the information to the radio frequency apparatus 112, and the radio frequency apparatus 112 processes the received information and sends out the processed information through the antenna 111.

The method executed by the network side device in the above embodiment can be implemented in the baseband apparatus 113. The baseband apparatus 113 includes a baseband processor.

The baseband apparatus 113 may include, for example, at least one baseband board. The baseband board is provided with a plurality of chips. As shown in FIG. 11, one of the chips is, for example, the baseband processor, which is connected to the memory 115 through a bus interface so as to invoke a program in the memory 115 to execute network device operations shown in the above method embodiment.

The network side device may further include a network interface 116, which is, for example, a common public radio interface (CPRI).

Specifically, the network side device 110 in this embodiment of this application further includes: an instruction or program stored in the memory 115 and runnable in the processor 114. The processor 114 invokes the instruction or program in the memory 115 to execute methods executed by various modules shown in FIG. 8 and achieve the same technical effects. In order to avoid repetition, details will not be repeated here.

An embodiment of this application further provides a readable storage medium, which may be non-volatile or volatile. The readable storage medium stores a program or instruction therein. The program or instruction, when executed by a processor, implements processes of the above information reporting method embodiment, or implements processes of the above configuration method embodiment, and can achieve the same technical effects. In order to avoid repetition, details will not be repeated here.

Optionally, the processor is the processor in the terminal in the above embodiment. The readable storage medium includes a computer-readable storage medium, such as computer read-only memory (ROM), a random access memory (RAM), a magnetic disk, an optical disk or the like.

An embodiment of this application further provides a chip, including a processor and a communication interface. The communication interface is coupled with the processor. The processor is configured to run a program or instruction to implement processes of the above information reporting method embodiment or processes of the above configuration method embodiment and can achieve the same technical effects. In order to avoid repetition, details will not be described here.

It should be understood that the chip mentioned in this embodiment of this application may also be called a system on chip, a system chip, a chip system, a system on a chip or the like.

An embodiment of this application further provides a computer program/program product. The computer program/program product is stored in a storage medium. The computer program/program product is executed by at least one processor to implement processes of the above information reporting method embodiment or processes of the above configuration method embodiment and can achieve the same technical effects. In order to avoid repetition, details will not be described here.

An embodiment of this application further provides a communication system, including: a primary terminal, a secondary terminal and a network side device. The primary terminal may be configured to execute steps of the information reporting method of FIG. 3. The secondary terminal may be configured to execute steps of the information reporting method of FIG. 4, and the network side device may be configured to execute steps of the configuration method of FIG. 5.

It should be noted that the term "include", "comprise", or any other variant thereof is intended to cover a non-exclusive inclusion, such that a process, method, article or apparatus that includes a series of elements includes not only those elements but also other elements not specifically listed, or elements that are inherent to the process, method, article or apparatus. In the absence of further limitation, an element defined by the phrase "including a ..." does not exclude the presence of the same element in the process, method, article or apparatus including the element. In addition, it should be noted that the scope of the method and apparatus in the implementations of this application is not limited to performing functions in the order shown or discussed, but also may include performing functions in a substantially simultaneous manner or in a reverse order according to the functions involved. For example, the described methods may be performed in a different order from that described, and various steps may also be added, omitted, or combined. In addition, features described with reference to some examples may be combined in other examples.

Through the description of the above implementations, those skilled in the art can clearly understand that the methods according to the above embodiments can be implemented by means of software plus a necessary general hardware platform, and of course, they can also be implemented by hardware, but in many cases the former is a better implementation. Based on such an understanding, the technical solution of this application essentially or for the part that contributes to the related art can be embodied in the form of a software product, and the computer software product is stored in a storage medium (such as an ROM/RAM, a magnetic disk or an optical disk) and includes several instructions to enable a terminal facility (which may be a mobile phone, a computer, a server, an air conditioner, a network device or the like) to execute the method described in the embodiments of this application.

Although the embodiments of this application have been described above with reference to the accompanying drawings, this application is not limited to the specific implementations described above, and the specific implementations described above are merely illustrative, and not restrictive. Under the inspiration of this application, those of ordinary skill in the art can make various forms without departing from the spirit of this application and the scope protected by the claims, which are all within the scope of this application.

## Claims

1. An information reporting method, comprising:
receiving, by a primary terminal, configuration information from a network side device, wherein the primary terminal is capable of co-transmitting data with a secondary terminal; and
sending, by the primary terminal, a buffer status report (BSR) to the network side device according to the configuration information.

2. The method according to claim 1, wherein a buffered data volume in the BSR comprises at least one of:
a data volume of a packet data convergence protocol (PDCP) entity of an aggregation bearer; and
a data volume of a radio link control (RLC) entity located at the primary terminal corresponding to the PDCP entity of the aggregation bearer;
wherein the aggregation bearer is a split bearer whose PDCP anchor is at the primary terminal.

3. The method according to claim 1 or 2, wherein the buffered data volume in the BSR comprises:
a first data volume; wherein the first data volume is a data volume of an RLC entity located at the secondary terminal corresponding to the PDCP entity of the aggregation bearer.

4. The method according to claim 3, wherein the BSR is sent in a case that the primary terminal receives a BSR request of the secondary terminal, the BSR request comprising the first data volume.

5. The method according to claim 3, wherein the sending the buffer status report (BSR) to the network side device comprises:
the primary terminal sends the first data volume using a target logical channel group (LCG), or sends the first data volume through a target medium access control control element (MAC CE).

6. The method according to claim 1, wherein a buffered data volume in the BSR comprises at least one of:
a data volume of a PDCP entity of an aggregation bearer; and
a data volume of an anchor RLC entity corresponding to the PDCP entity of the aggregation bearer;
wherein the aggregation bearer is a split bearer whose RLC anchor is at the primary terminal.

7. The method according to any one of claims 1 to 6, wherein the method further comprises:
acquiring, by the primary terminal, a size of uplink grant resources allocated by the network side device for the secondary terminal; and
sending, by the primary terminal, first data buffered and conforming to the size of the uplink grant resources to the secondary terminal.

8. The method according to claim 7, wherein the acquiring a size of uplink grant resources allocated by the network side device for the secondary terminal comprises:
the primary terminal monitors a physical downlink control channel (PDCCH) of the secondary terminal to acquire the size of the uplink grant resources;
or
the primary terminal receives a first request from the secondary terminal, the first request comprising the size of the uplink grant resources.

9. The method according to claim 7, wherein the first data comprises at least one of:
a PDCP protocol data unit (PDU);
at least one of an initially transmitted RLC PDU, a retransmitted RLC PDU and an RLC status PDU;
at least one of a MAC PDU, a MAC sub PDU and a MAC CE; and
a MAC transport block (TB).

10. The method according to claim 1, wherein the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

11. An information reporting method, comprising:
receiving, by a secondary terminal, configuration information from a network side device, wherein the secondary terminal is capable of co-transmitting data with a primary terminal; and
sending, by the secondary terminal, a BSR to the network side device according to the configuration information.

12. The method according to claim 11, wherein the BSR comprises: a first data volume; wherein the first data volume is a data volume of an RLC entity located at the secondary terminal corresponding to a PDCP entity of an aggregation bearer; and the aggregation bearer is a split bearer whose PDCP anchor is at the primary terminal.

13. The method according to claim 11, wherein the method further comprises:
acquiring, by the secondary terminal, uplink grant resources allocated by the network side device therefor; and
packetizing, by the secondary terminal, buffered data of the secondary terminal according to a size of the uplink grant resources, and sending the data packet obtained by the packetization.

14. The method according to claim 11, wherein the method further comprises:
sending, by the secondary terminal, a BSR request to the primary terminal, the BSR request comprising a first data volume and being used for reporting the first data volume by the primary terminal;
wherein the first data volume is a data volume of an RLC entity located at the secondary terminal corresponding to a PDCP entity of an aggregation bearer; and the aggregation bearer is a split bearer whose PDCP anchor is at the primary terminal.

15. The method according to claim 11, wherein the method further comprises:
sending, by the secondary terminal, second data through an RLC entity thereof;
wherein the second data comprises at least one of:
an RLC service data unit (SDU) segment incapable of being completely accommodated during one sending process of the RLC entity;
an RLC status PDU triggered according to an RLC AM protocol in a case that the RLC entity of the secondary terminal is in an AM; and
an RLC retransmitted PDU triggered according to the RLC AM protocol in a case that the RLC entity of the secondary terminal is in the AM.

16. The method according to any one of claims 11 to 15, wherein the method further comprises:
sending, by the secondary terminal, a first request to the primary terminal, the first request comprising a size of the uplink grant resources allocated by the network side device for the secondary terminal; and
receiving, by the secondary terminal, first data from the primary terminal, packetizing the first data, and sending the data packet obtained by the packetization, wherein the first data is data buffered by the primary terminal and conforms to the size of the uplink grant resources.

17. The method according to claim 16, wherein the first data comprises at least one of:
a PDCP PDU;
at least one of an initially transmitted RLC PDU, a retransmitted RLC PDU and an RLC status PDU;
at least one of a MAC PDU, a MAC sub PDU and a MAC CE; and
a MAC TB.

18. The method according to claim 11, wherein the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

19. A configuration method, comprising:
sending, by a network side device, configuration information to a primary terminal and/or a secondary terminal;
wherein the primary terminal is capable of co-transmitting data with the secondary terminal; and the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

20. The method according to claim 19, wherein the method further comprises at least one of the following:
allocating, by the network side device, uplink grant resources for the primary terminal and the secondary terminal according to a BSR of the primary terminal; and
allocating, by the network side device, the uplink grant resources for the primary terminal according to the BSR of the primary terminal, and allocating the uplink grant resources for the secondary terminal according to a BSR of the secondary terminal.

21. An information reporting apparatus, applied to a primary terminal, comprising:
a first receiving module, configured to receive configuration information from a network side device, wherein the primary terminal is capable of co-transmitting data with a secondary terminal; and
a first sending module, configured to send a BSR to the network side device according to the configuration information.

22. An information reporting apparatus, applied to a secondary terminal, comprising:
a second receiving module, configured to receive configuration information from a network side device, wherein the secondary terminal is capable of co-transmitting data with a primary terminal; and
a third sending module, configured to send a BSR to the network side device according to the configuration information.

23. A configuration apparatus, applied to a network side device, comprising:
an eighth sending module, configured to send configuration information to a primary terminal and/or a secondary terminal;
wherein the primary terminal is capable of co-transmitting data with the secondary terminal; and the configuration information is used for indicating at least one of the following:
the network side device configuring a split bearer for the primary terminal;
a PDCP entity of the split bearer configured by the network side device being located at the primary terminal;
the PDCP entity of the split bearer configured by the network side device being located at the primary terminal, the PDCP entity being associated with at least two RLC entities, and the RLC entities being each located at different primary terminals or secondary terminals;
a type of the split bearer configured by the network side device;
standardized interfaces being adopted between the primary terminal and the secondary terminal;
non-standardized interfaces being adopted between the primary terminal and the secondary terminal;
non-ideal interfaces being adopted between the primary terminal and the secondary terminal;
ideal interfaces being adopted between the primary terminal and the secondary terminal; and
a BSR reporting manner adopted by the primary terminal.

24. A terminal, comprising a processor and a memory, the memory storing a program or instruction runnable in the processor, and the program or instruction, when executed by the processor, implementing steps of the information reporting method according to any one of claims 1 to 10, or steps of the information reporting method according to any one of claims 11 to 18.

25. A network side device, comprising a processor and a memory, the memory storing a program or instruction runnable in the processor, and the program or instruction, when executed by the processor, implementing steps of the configuration method according to claim 19 or 20.

26. A readable storage medium, storing a program or instruction therein, and the program or instruction, when executed by a processor, implementing steps of the information reporting method according to any one of claims 1 to 10, or steps of the information reporting method according to any one of claims 11 to 18, or steps of the configuration method according to claim 19 or 20.
